# EUROPEAN PATENT APPLICATION

(11) **EP 4 538 812 A1**
(43) Date of publication of application: **16.04.2025**
(21) Application number: 23202386.1
(22) Date of filing: 09.10.2023
(51) Int. Cl.: G05B 19/418, B21D 43/24

(54) **METHOD FOR TRANSFERRING METAL PLATES TO THE MACHINING TABLE OF A THERMAL PROCESSING MACHINE, AND SORTING SYSTEM SUITABLE THEREFOR**

(71) Applicant: Messer Cutting Systems GmbH, 64823 Gross-Umstadt (DE)
(72) Inventor: HELLER, William A, 64823 Gross-Umstadt (DE); MANI, Narayanan, 64823 Gross-Umstadt (DE); GÖLLER, Ingo, 64823 Gross-Umstadt (DE)
(74) Representative: Wolf & Wolf Patentanwaltsgesellschaft mbH

(57) **Abstract**

In order to provide a simple, cost-effective and space-saving method for transferring metal plates to the machining table of a thermal processing machine, the following process steps are suggested:
(a) Identifying of each plate at least in terms of plate type,
(b) Forming a chaotic first supply stack of plates, and storing information regarding plate type and stack position of said plates in the first supply stack in a storage by means of a process control,
(c) Forming at least a chaotic second supply stack of plates, and storing information regarding plate type and stack position of said plates in the second supply stack in the storage by means of the process control,
(d) Determining the plate type of the plate to be transferred to the machining table as next and selecting the first supply stack or the at least second supply stack for removal of a plate having the determined plate type by means of the process control, and
(e) Picking up an upper plate from the selected supply stack by means of a gripper, and
(i) transferring said upper plate to the machining table, if said upper plate is a plate of the determined plate type, and updating the plate type and position information in the storage by means of the process control,
(ii) or transporting the upper plate of the selected supply stack to the respective other supply stack if the upper plate is not a plate of the determined plate type, updating the plate type and position information in the storage by means of the process control, and repeating process step (e).

## Description

### TECHNICAL FIELD

The present disclosure relates in general to the technical field of storage, handling and supply of different types of metal plates to a thermal processing machine for the purpose of their further processing.

In particular, the present invention relates to a method for transferring metal plates to the machining table of a thermal processing machine, wherein metal plates of a first plate type and metal plates of at least a second plate type are present.

Furthermore, the present invention relates to a sorting system for transferring plates of a first plate type and plates of at least a second plate type to the machining table of a thermal processing machine.

A *"thermal processing machine"* is used to process metal workpieces, for example by cutting, welding, coating or marking. Thermal processing machines are for example laser cutting machines, plasma cutting machines, fluid cutting machines or finishing machines. A thermal processing machine comprises a machining table for supporting the workpiece and a machine tool for thermal processing the workpiece. Thermal processing of the workpiece is performed by applying thermal energy to the workpiece, for example by means of a laser, a plasma beam or infrared lamps.

The term *"plate"* in the context of the invention designates a workpiece having a thickness and flat plane surface with a length and a width which are large in relation to the thickness of the workpiece. Typical plates show a more or less constant thickness, usually from 1 mm to 40 mm, with a length of the flat plane in the range from 1,000 mm to 8,000 mm and a width of the flat plane in the range from 1,000 mm to 4,000 mm. For example, the term plate covers a flat sheet as well as a heavy plate made of metal.

A single thermal processing machine can process in sequence different workpieces in the form of plates. Plates may differ, for example, in the material they are made of, in their dimensions, especially their thickness. For example, a thermal processing machine can process chemically different types of metal workpieces which may also differ in their workpiece thickness and their further dimensions. Plates can therefore be grouped together on the basis of at least one, preferably several, of their different properties into different *"plate types".* The present invention deals with the issue of storing and providing different types of plates to the machining table of a thermal processing machine easily and in the correct order. This implies that plates of at least two plate types are processed with the same thermal processing machine, namely plates of a first plate type and plates of at least a second plate type. Preferably, the number of plate types can be freely selected.

### STATE OF THE ART

In the field of thermal processing of metal plates, there is a focus on optimizing process variables to achieve increasingly better controlled, orderly and efficient productivity. Therefore, known manufacturing machines such as thermal processing machines are often highly automated. This applies in particular to the transfer of workpieces like plates to the machining table of the thermal processing machine. The automated transfer of workpieces reduces set-up times and maximizes machine productivity.

An automated transfer of workpieces to the thermal processing machine is easy if only workpieces of the same type are to be transferred. But in fact, the thermal processing machine may be used for processing a number of different types of workpieces.

Typically, the workpieces are stored in a stock where they are stacked according to uniform thicknesses and from where they have to be transferred to the processing machine in the order in which they are used, for example, with the correct thicknesses.

In order to be able to feed different workpieces one after the other to the machining table in a simple, space-saving and cost-effective manner, DE 88 10 567 U1 teaches an apparatus for stacking metal sheets in a storage unit and for transporting them from the storage unit to a CNC controlled nibbling machine, punching machine or laser machine. The storage unit comprises a rack with several compartments arranged one above the other. The apparatus combines metal sheets of one type into a stack and places the stack in a first compartment while metal sheets of another type are combined to form another stack which is placed in another, second compartment. This facilitates the selective supply of different types of metal sheets from the storage unit to the processing machine.

Another apparatus with a rack for storing stacks of metal sheets and for transporting metal sheets to a laser processing machine is known from DE 10 2009 016 879 A1.

### TECHNICAL PROBLEM

However, especially when storing metal plates in a rack, high demands have to be made on the stability of the rack. This makes the rack expensive and limits the height of the rack and the number of compartments in the rack. Therefore, storing plates as separate type in individual compartments of a rack requires even a lot of space and is costly.

It is an object of the present invention to provide an improved method for transferring different types of metal plates to the machining table of a thermal processing machine which is simple, cost-effective and space-saving.

It is a further object of the present invention to provide an improved, simple, cost-effective and space-saving sorting system for transferring metal plates, present in a first plate type and in at least one second plate type.

### BRIEF DESCRIPTION OF THE INVENTION

With regard to the method for transferring metal plates to the machining table of a thermal processing machine, the above-mentioned technical objective is achieved in that the method comprises the following process steps:
(a) Identifying of each plate at least in terms of plate type,
(b) Forming a chaotic first supply stack of plates, and storing information regarding plate type and stack position of said plates in the first supply stack in a storage by means of a process control,
(c) Forming at least a chaotic second supply stack of plates, and storing information regarding plate type and stack position of said plates in the second supply stack in the storage by means of the process control,
(d) Determining the plate type of the plate to be transferred to the machining table as next and selecting the first supply stack or the at least second supply stack for removal of a plate having the determined plate type by means of the process control, and
(e) picking up an upper plate from the selected supply stack by means of a gripper, and
   (i) transferring said upper plate to the machining table, if said upper plate is a plate of the determined plate type, and updating the plate type and position information in the storage by means of the process control,
   (ii) or transporting the upper plate of the selected supply stack to the respective other supply stack if the upper plate is not a plate of the determined plate type, updating the plate type and position information in the storage by means of the process control, and repeating process step (e).

Thermal processing machines are often used to process a wide range of different plates. This leads to two problems: On the one hand, the plates have to be stored in large quantities and on the other hand from this quantity of plates, the right one must be selectively and quickly transferred to thermal processing. Therefore, in known methods for transferring plates to the machining table of a thermal processing machine, the plates are stored according to type, either on a floor space or more space-saving on a rack. But this is costly and even space-consuming.

The present invention is based on the idea of dispensing with rack storage of the plates and instead storing the plates chaotically on top of each other in at least two chaotic supply stacks as well as storing information on stack position and plate type and processing this information by means of a data processing device. The term "plate" according to the invention means either individual plates or a pallet in which plates of the same plate type are combined. Forming the first supply stack can be done by depositing plates or pallets containing plates by a forklift or crane or by means of a gripper on a first stacking table. Forming the second supply stack can be done by depositing plates or pallets containing plates by means of a gripper on a second stacking table. The storage of plates on top of each other has the advantage of being very space-saving and being cost-effective as there is no need for a rack. At least two supply stacks allow the plates to be rearranged in such a way that a plate with a specific plate type can be placed on top of one of the stacks. Storing and processing information on stack position and plate type facilitates the rearrangement of the stacks and the retrieval of stored plates.

According to the invention it is provided that each plate is identified at least in terms of plate type. Preferably, the process step of identifying each plate takes place immediately when new plates are supplied to the storage. This ensures that there are no unidentified plates in the storage.

The process control determines which plate is to be transferred next to the machining table of the thermal processing machine. Which plate the process control determines may depend, for example, on the production planning, the availability of plates of a specific type or the prioritization of certain work jobs.

Starting from the however determined next plate type the process control selects the first supply stack or the at least second supply stack for removal of a plate having the determined plate type. One criterion for selecting one of the stacks is the presence of a plate of the selected plate type in the selected stack. A further criterion can be the number of gripper movements needed to reach a plate with the determined plate type. In other words, the stack is selected in which a plate with this plate type can be reached with the least number of gripper movements. In the simplest case, this is the number of movements to the next plate of the desired plate type. Preferably, however, the process control works more predictively and takes into account not only the plate type required as the next, but also the plate type required as the next but one, the next but one, and so on. The more foresighted the process control works, the more effective is it.

When a specific plate is required, the plates above the required plate are transferred to the respective other stack. This applies accordingly for pallets containing plates. Once the transfer is complete, the required plate can be transferred to the machining table of the thermal processing machine. All this may be done with the same gripper or handling system. Preferably, in the case of transferring plates the gripper is a vacuum suction gripper. In this case only a small space above and around the stack is required to lift the plates from it. Preferably in the case of pallets the gripper is a handling system with a stacking element.

In a first variation of the method according to the invention, the process steps (d) and (e) are carried out while simultaneously machining at least one other plate by means of the thermal processing machine.

The chaotic storage of plates makes it necessary to rearrange the stacks before transferring a plate. This is time-consuming. But also the thermal processing of a workpiece in form of plate usually requires a certain amount of time, the so-called machining time. If the process steps (d) and (e) are carried out during the processing time of another plate, the processing time is used for preparing the next machining operation by means of the thermal processing machine. The processing time is used effectively and the chaotic storage of the plates does not result in any additional time expenditure.

In this context, it has proven to be advantageous, when the machining of the at least one other plate comprises thermal machining of a first other plate on the machining table and/or transporting away a second, already machined, other plate, from the machining table to a deposit station.

The period of time available for rearranging the stacks is not only defined by the pure machining time of the simultaneously machined plate. It also includes the time that elapses until machining can be started, e.g. the time for unloading and loading the machining table. The term "deposit station" refers to a place where a processed plate can be stored for a certain period of time after processing, e.g. an output table or a storage area, for example with a rack.

In a further variant of the method according to the invention identifying each plate at least in terms of its plate type according to process step (a) comprises determining of the individual thickness of the plate and/or determining of the individual material of the plate and/or determining the individual weight of the plate, whereby the information about the individual thickness and/or individual material and/or individual weight of the plate is stored in the storage by means of the process control.

Metal plates can differ in a variety of properties, e. g. in thickness, material, weight, dimensions, etc. In the simplest case, a plate is identified at least in terms of its plate type by manually entering its parameters at a terminal, e.g. by typing or by scanning a barcode, whereby the information is stored in a storage by means of the process control. However, this is very simple and cost-effective, but a rather error-prone, non-automated method. Advantageously, the identification of each plate is done with at least one sensor being able to detect the at least one of the above mentioned plate properties. Suitable sensors are, for example:

| | |
|---|---|
| - a weighing device: | The weight of the plate can be used to determine the plate type. |
| - a scanner or camera: | The plate can be provided with a label, the recognition of which makes it possible to determine the plate type, e.g. a barcode or a QR-code. |
| | Alternatively, the camera can be calibrated, for example, to measure dimensions or material properties. |

Preferably, when picking up the upper plate according to process step (e), the plate type of the picked-up plate is determined and compared with the information on plate type stored in the storage.

The determination of the plate type can be used to check and verify the transfer of the correct plate type to the machining table of the thermal processing machine. This can be done in the same way as described for the identification step, e.g. by detecting the individual plate weight or by reading a bar code or QR code. For this purpose, the gripper may be equipped with a weighing mechanism to check the weight of the plates. Alternatively, the first stacking table and the at least second stacking table may be equipped with a weighing mechanism, whereby the weight of the transferred plate results form the difference in weights on the stacking tables.

Preferably, when forming the first supply stack according to process step (b), plates of the first plate type and/or plates of the at least second plate type are deposited one on top of each other on a first stacking table by means of a transport device.

Transport devices are designed to lift and move plates over short distances independently of the process control. Transport devices are particularly suitable for transporting plates stored on pallets. Examples of transport devices are a forklift or a crane.

Alternatively, during forming of the first supply stack according to process step (b), plates of the first plate type and/or plates of the at least second plate type are deposited on a deposit table by means of a transport device, removed from there by means of a gripper, and are fed to a first stacking table being deposited there one on top of the other, thereby forming the first supply stack.

The provision of new plates on a separate deposit table has the advantage that the plates stored on it can be continuously fed to the machining process, i.e. during the ongoing machining process and even without disturbing it. In particular idle times of the gripper may be used for a transfer of new plates to the first supply stack.

In a further variant of the method according to the invention, the process step of forming the first supply stack according to process step (b) is discontinuous and is completed before the start of step (e)

If the stacking process is completed before the plates are fed to the machining table, the position of the plates in each stack is known or can be calculated in advance and the process control is able to calculate the next process steps much further in advance. On the other hand, in a discontinuous process, downtimes always occur due to the loading of plates at the beginning.

Therefore, it is preferred that the forming of the first supply stack according to process step (b) takes place continuously and in parallel to the working step (e).

Continuous feeding of plates has the advantage that neither the "stacking process" nor the "shuffling process" has to be interrupted for the other. With other words, the "stacking process" and the "shuffling process" run simultaneously. The process takes place continuously when it takes place from time to time, ongoing or on demand.

It is advantageous that, when forming the second supply stack, plates of the first plate type and/or of the at least second plate type are removed by means of the gripper either from the first supply stack or from a deposit table and are deposited one on top of the other on a second stacking table.

Using a gripper is advantageous because for a correct function of a gripper only some space above and around both of the supply stacks is needed. Consequently, the stacks can be spaced only a short distance apart, which is particularly space-saving.

Preferably, a plurality of plates of the same type are detachably and separably combined from each other in a partial pallet, wherein forming the first supply stack according to process step (b) and forming the second supply stack according to process step (c) comprises stacking partial pallets on top of each other, and wherein a partial pallet or an upper part from a partial pallet is selectively picked up and transported with a gripper.

Often plates of the same plate type are delivered on pallets. In such cases it would be additional work to feed the plates individually to the first stacking table. Furthermore, many plates of the same type would then be stored directly after the other in the first supply stack. This results in frequent restacking. It has therefore been shown that the advantages according to the invention can also be achieved by feeding the plates on pallets to the first stacking table. Advantageously, the gripper has both a device for picking up individual plates, e.g. suction heads, as well as a device for picking up pallets, e.g. forks.

Preferably, picking up an upper plate from the selected supply stack by means of a gripper according to process step (e) comprises picking up several plates simultaneously by means of multiple plate gripper, whereby the simultaneously picked up plates are transported to the respective other supply stack according to process step (ii).

Using a suction device like a suction head implies that only the upper plate can be lifted and transferred individually. However, this is disadvantageous if the plate of the determined plate type that is to be transferred to the machining table is covered with several plates of other plate types. Therefore, in terms of process duration and costs, it is advantageous when several plates can be picked up and transferred to the respective other supply stack by means of the gripper. Preferably, the gripper has arms for gripping under a pile of several plates. Either a predetermined maximum number of plates can be transferred simultaneously with the multiple plate gripper or the number of simultaneously transferable plates can be freely selected below the maximum. In the first case, the sorting system acts as an upstream sorting system and a certain number of plates may remain on the plate to be transferred to the machining table. These plates must be transported individually, plate by plate, to the respective other supply stack, for example using a vacuum suction gripper. In the second case, only the plate to be transferred to the machining table must be transported individually by a single plate gripper, for example using a vacuum suction gripper.

Only a single plate has to be transferred to the machining table. Therefore, it is preferred that transferring said upper plate to the machining table according to process step (i) is achieved by means of a single plate gripper picking up a single plate.

With regard to the sorting system for transferring metal plates, present in a first plate type and in at least one second plate type, to the machining table of a thermal processing machine, the above-mentioned technical objective is achieved in that the sorting system comprises:
(A)a means for identifying each plate at least in terms of plate type,
(B)a first stacking table for receiving a chaotic first supply stack of plates,
(C)a second stacking table for receiving a chaotic second supply stack of plates,
(D)a storage for storing information regarding plate type and stack position of the plates present in said first supply stack and said at least second supply stack,
(E)a process controller being designed to store and update information on plate type and stack position in the storage, and to select the first supply stack or the at least second supply stack for removal of a plate having a previously determined plate type, and
(F)at least a gripper for selectively picking up an upper plate from either the first supply stack or the at least second supply stack, the gripper being designed
   (i) to transfer the upper plate to the machining table, if said upper plate is a plate of the plate type to be transferred to the machining table as next,
   (ii) or to transfer the upper plate to the respective other supply stack if the upper plate is not a plate to be transferred to the machining table as next.

The sorting system according to the invention is designed for transferring metal plates to a thermal processing machine, having a machine tool and a machining table for receiving a plate to be thermally processed. The sorting system according to the invention further comprises a means for identifying each plate, a first stacking table, a second stacking table, a data storage, a process controller and a gripper, all corresponding to the process steps of the method according to the invention. As the method according to the invention as well as advantageous variants thereof are explained above, these explanations apply equally to the sorting system according to the invention and the parts thereof.

The present invention is based on the idea of dispensing with rack storage of the plates and instead storing the plates chaotically on top of each other in at least two chaotic supply stacks as well as storing information on stack position and plate type and processing this information by means of a data processing device, which is the process controller.

The process controller determines which plate is to be transferred next to the machining table of the thermal processing machine. Which plate the process controller determines may depend, for example, on the production planning, the availability of plates of a specific type or the prioritization of certain work jobs.

Furthermore, the sorting system comprises according to the invention a storage for storing information regarding plate type and stack position of the plates present in said first supply stack and said at least second supply stack. The storage is a data storage, which can be a physical part of the sorting system, like a hard disk drive that is directly controlled by the process controller or it may be a storage being no physical part of the sorting system, but being controllable by the sorting system, like a cloud storage. The data in this storage forms the basis for the process controller when it selects the first supply stack or the at least second supply stack for removal of a plate having a previously determined plate type. One criterion for selecting one of the stacks is the presence of a plate of the selected plate type in the selected stack. Another important criterion for the selection of one of the supply stacks may be the number of gripper movements that have to be performed to transport one or more plates to the machining table of the thermal processing machine.

When a specific plate is required, the plates above the required plate are transferred by the gripper to the respective other stack. Once the transfer is complete, the required plate can be transferred by gripper to the machining table of the thermal processing machine. All this may be done with the same gripper or handling system. Preferably, in the case of transferring plates the gripper is a vacuum suction gripper. Preferably in the case of pallets the gripper is a handling system with a stacking element.

In a preferred embodiment, the sorting system comprises a sensor connected to the process control for determining the individual thickness of a plate and/or the individual material of a plate and/or the individual weight of a plate.

Plates can differ in a variety of properties, e. g. in thickness, material, weight, dimensions, etc. In the simplest case, a plate is identified at least in terms of its plate type by manually entering its parameters at a terminal. Advantageously, this may be done automatically with at least one sensor being able to detect at least one of the above-mentioned plate properties. Suitable sensors are, for example a weighing device or a scanner or camera. Preferably, the sorting system is designed for categorizing the plate type on the basis of the plate thickness of the plates.

Preferably, the sorting system comprises a transport device or it cooperates with a transport device suitable for stacking plates on the first stacking table.

Transport devices are designed to lift and move plates over short distances independently of the process controller. Transport devices are particularly suitable for transporting plates stored on pallets. Examples of transport devices are a forklift or a crane.

In a preferred embodiment, the sorting system comprises a transport device or that it cooperates with a transport device suitable for stacking plates on a deposit table, and the gripper is adapted to pick up plates from the deposit table and transport the plates to the first stacking table.

The provision of new plates on a separate deposit table by a transport device like a forklift or crane has the advantage that the plates stored on it can be continuously fed to the machining process, i.e. during the ongoing machining process and even without disturbing it. In particular idle times of the gripper may be used for a transfer of new plates to the first supply stack.

In another preferred embodiment, the sorting system is characterized in that the gripper is adapted to remove plates either from the first stacking table and/or from a deposit table and to transport the plates to the second stacking table.

Preferably, the sorting system is characterized in that a plurality of plates of the same type are detachably and separably combined from each other in a partial pallet, wherein forming the first supply stack and forming the second supply stack comprises stacking partial pallets on top of each other, and wherein the gripper is adapted for picking up and transporting both a partial pallet and a top plate from a partial pallet.

Often plates of the same plate type are delivered on pallets. In such cases it would be additional work to feed the plates individually to the first stacking table. Furthermore, many plates of the same type would then be stored directly after the other in the first supply stack. This would result in frequent restacking during thermal processing. It has therefore been shown that the advantages according to the invention can also be achieved by feeding the plates on pallets to the first stacking table. Advantageously, the gripper has both a device for picking up individual plates, e.g. suction heads, as well as a device for picking up pallets, e.g. forks.

### DETAILED DESCRIPTION

The present invention will be more apparent from the following description of embodiments with reference to the accompanying drawings, in which:

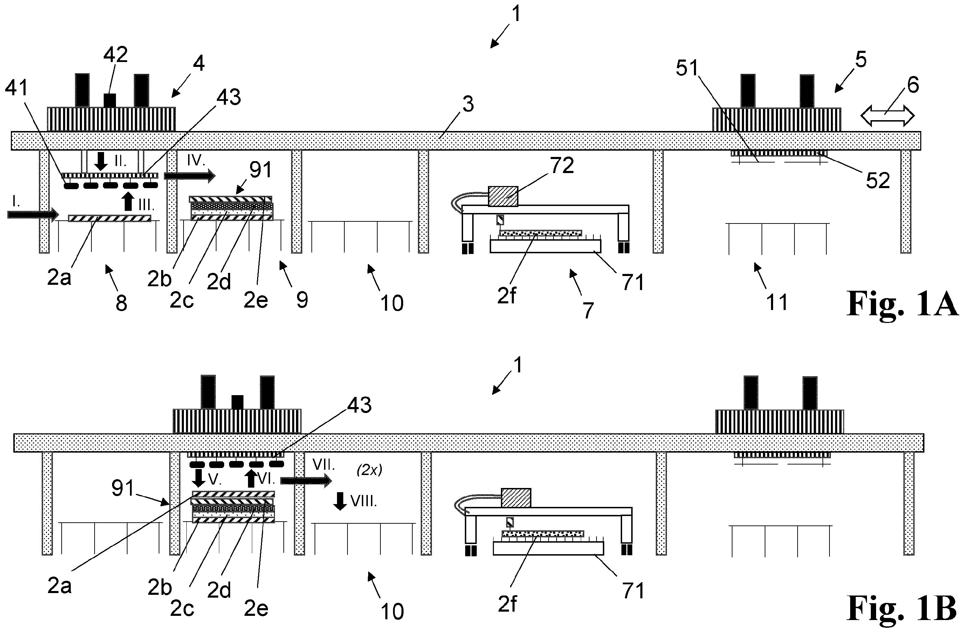

**Figures 1A to 1D** show schematically in a side view a first sorting system 1 according to the invention having a separate deposit table 8. Based on these figures, the process steps of depositing individual plates 2a, 2b, 2c 2d, 2e, 2f, forming a first supply stack 91, sorting the plates 2a, 2b, 2c, 2d, 2e, 2f using a second supply stack 101 and transferring a selected plate having a predetermined plate type I to V to the machining table 71 of a thermal processing machine 7 are explained. In the following are explained on the basis of
- **Figure 1A**: the process steps of depositing plates 2a, 2b, 2c, 2d, 2e, 2f on a deposit table 8, identifying each plate 2a, 2b, 2c, 2d, 2e, 2f and forming a chaotic first supply stack 91 of plates 2a, 2b, 2c, 2d, 2e, 2f,
- **Figure 1B**: the process steps of forming a chaotic second supply stack 101 of plates, determining the plate type I to V of the plate 2a, 2b, 2c, 2d, 2e, 2f to be transferred to the machining table 71 as next, selecting one of the supply stacks 91, 101 and picking up an upper plate 2a, 2b, 2c, 2d, 2e, 2f from the selected supply stack 91, 101 and transporting the upper plate 2a, 2b, 2c, 2d, 2e, 2f to the respective other supply stack 91, 101,
- **Figure 1C**: the process steps of removing an already machined plate 2a, 2b, 2c, 2d, 2e, 2f from the machining table 71 and transferring the upper plate 2a, 2b, 2c, 2d, 2e, 2f of the selected supply stack 91, 101 to the machining table 71, and
- **Figure 1D**: machining the transferred upper plate 2a, 2b, 2c, 2d, 2e, 2f.

**Figures 2A to 2D** show schematically in a side view a second sorting system 200 according to the invention without a separate deposit table so that the first stacking table 9 serves as deposit table. Plates 2b, 2e are organized in pallets 202a, 202b, 202c, 202d. Empty pallets 202a, 202b, 202c, 202d are removed from the first supply stack 91 or the second supply stack 101. For this reason, there is no pallet in Figures 2A to 2D that corresponds to the plate with the reference number 2e. In the following are explained on the basis of

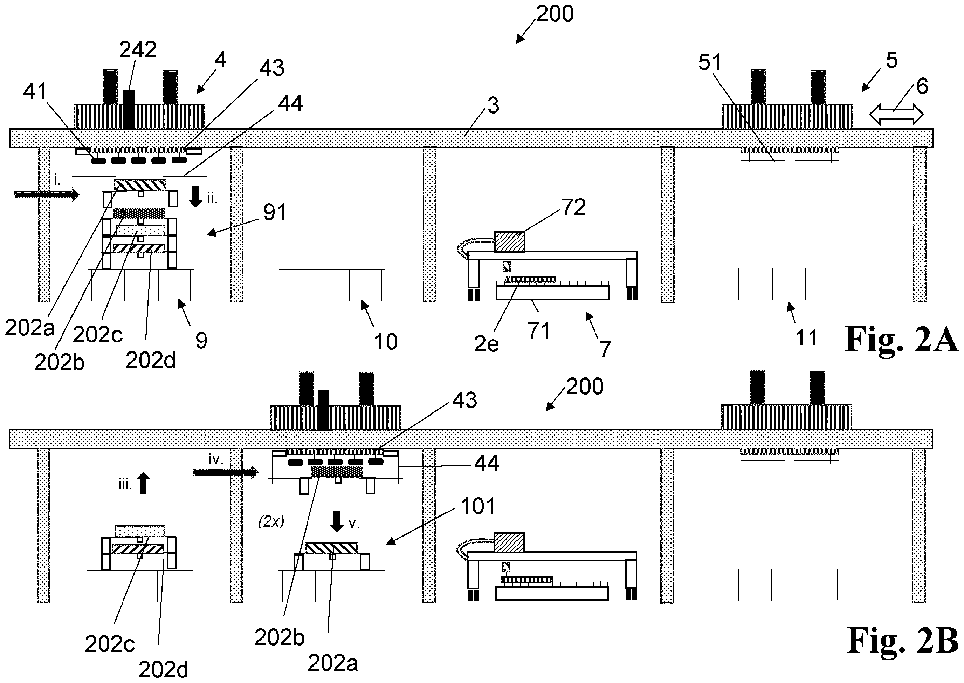

- **Figure 2A**: the process steps of forming a chaotic first supply stack 91 of pallets 202a, 202b, 202c, 202d with plates 2b, 2e on a first stacking table 9, depositing further pallets 202a, 202b, 202c, 202d on the first stacking table 9 and identifying each pallet 202a, 202b, 202c, 202d and plate 2b, 2e,
- **Figure 2B**: the process steps of forming a chaotic second supply stack 101 of pallets 202a, 202b, 202c, 202d and plates 2b, 2e,

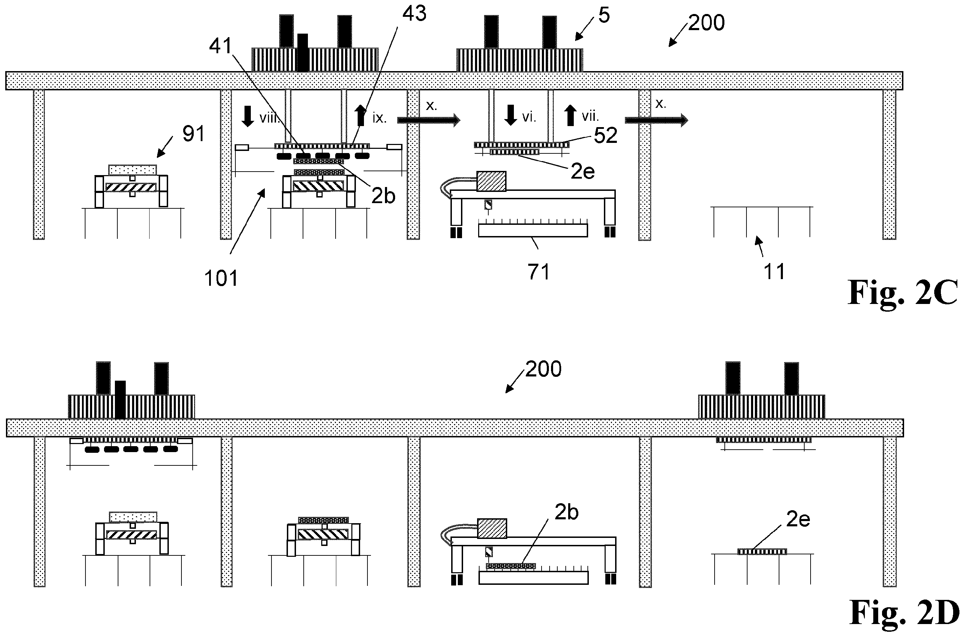

- **Figure 2C**: the process steps of removing an already machined plate 2b, 2e from the machining table 71, picking up an upper plate 2b, 2e from the corresponding pallet 202a, 202b, 202c, 202d and transferring the upper plate 2b, 2e to the machining table 71, and
- **Figure 2D**: machining the transferred upper plate 2b, 2e, and

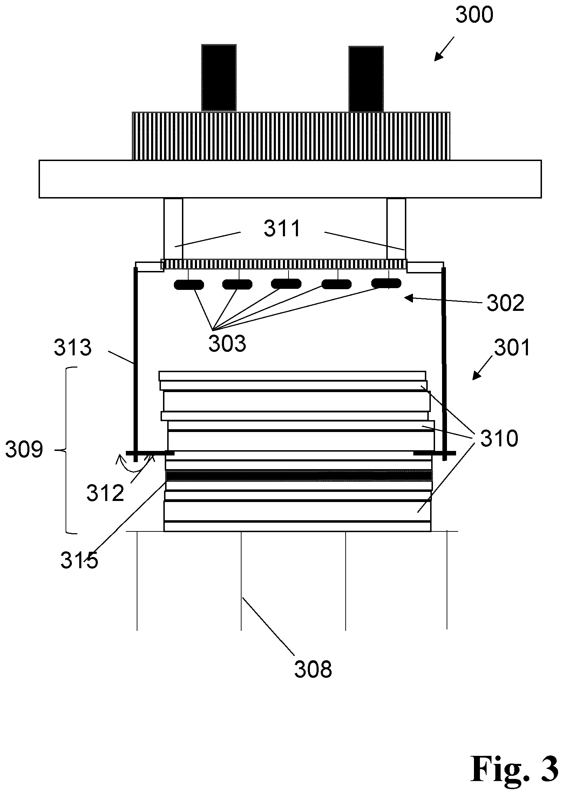

- **Figure 3**: shows the process step of picking up several plates 310, 315 simultaneously by means of a multiple plate gripper 301.

Where reference numbers in Figures 1A to 1D and Figures 2A to 2D are the same, they refer to identical or equivalent components or parts.

**Figure 1A** shows in a side view a first sorting system 1 according to the invention. For the purpose of clarity, the features of the sorting system 1 are primarily described with reference to figure 1A. The sorting system 1 is designed for transferring plates 2a, 2b, 2c, 2d, 2e, 2f. For reasons of simplification, only six plates 2a, 2b, 2c, 2d, 2e, 2f are shown in figures 1A to 1D. Of course, it is possible and meant to store and handle a much larger number of plates 2a, 2b, 2c, 2d, 2e, 2f. The plates 2b, 2d are identical, therefore being of one plate type. The plates 2a, 2c, 2e, 2f are not of the same plate type, they differ from the plates 2b, 2d and among each other in their plate thickness, size and material. For details see Table 1 below.

**Table 1**

| Plate No. | Length *[mm]* | Width *[mm]* | Thickness *[mm]* | Material | Plate type |
|---|---|---|---|---|---|
| 2a | 2,000 | 4,000 | 6 | Steel. | I |
| 2b | 1,500 | 3,000 | 10 | Steel. | II |
| 2c | 1,500 | 3,000 | 12 | Stainless steel. | III |
| 2d | 1,500 | 3,000 | 10 | Steel. | II |
| 2e | 2,000 | 4,000 | 6 | Stainless steel. | IV |
| 2f | 1,500 | 3,000 | 10 | Stainless steel. | V |

The sorting system 1 comprises a portal 3 with two grippers 4, 5. Below the portal 3 a laser processing machine 7 having a machining table 71 and a laser 72, a deposit table 8, a first stacking table 9, a second stacking table 10 and an output table 11 are arranged.

The grippers 4, 5 are attached to the portal 3 in such a way that they are movable laterally thereon. The directions of their movement are indicated by arrow 6.

The first gripper 4 is designed to pick up plates 2a, 2b, 2c, 2d, 2e, 2f from the deposit table 8, the first stacking table 9, the second stacking table 10 and the machining table 71 and to put them on the deposit table 8, the first stacking table 9, the second stacking table 10 and the machining table 71. The first gripper 4 is a vacuum suction type loader which grips a plate 2a, 2b, 2c, 2d, 2e, 2f via a suction mechanism. Therefore, first gripper 4 comprises several suction heads 41. Furthermore, the first gripper 4 comprises a means 42 for identifying each plate 2a, 2b, 2c, 2d, 2e, 2f in form of a weighing system for weighing a picked plate 2a, 2b, 2c, 2d, 2e, 2f.

The second gripper 5 is designed to pick up plates 2a, 2b, 2c, 2d, 2e, 2f which were processed with the laser processing machine 7 from the machining table 71 and place them on the output table 11. It comprises two pivoting arms 51 for gripping plates 2a, 2b, 2c, 2d, 2e, 2f.

In the following, the method according to the invention is explained in detail below with reference to Figures 1A to 1D:
**Figure 1A** shows the process steps of depositing plates 2a, 2b, 2c, 2d, 2e, 2f on the deposit table 8, identifying each plate 2a, 2b, 2c, 2d, 2e, 2f and forming a first supply stack 91 of unsorted plates 2a, 2b, 2c, 2d, 2e, 2f.
- *Arrow I.:*: To form the first supply stack 91 plates 2a, 2b, 2c, 2d, 2e, 2f have to be provided. The process step of forming the first supply stack 91 may be discontinuous. In this case plates 2a, 2b, 2c, 2d, 2e, 2f are provided in full before plates 2a, 2b, 2c, 2d, 2e, 2f are transferred to the machining table 71. However, as shown in Figure 1A it is also conceivable to provide plates 2a, 2b, 2c, 2d, 2e, 2f continuously, i.e. also during the machining process. This has the advantage of reducing interruptions to the machining process. The deposition of plates 2a, 2b, 2c, 2d, 2e, 2f on the deposit table 8 may be done by forklift or crane.
- *Arrow II.:*: To identify each plate 2a, 2b, 2c, 2d, 2e, 2f deposited on the deposit table 8 at least in terms of plate type I to V, each plate 2a, 2b, 2c, 2d, 2e, 2f is lifted by the gripper 4 using its suction heads 41. For this purpose, the loading device 43 is first moved towards the upper plate 2a, 2b, 2c, 2d, 2e, 2f on the deposit table 8. This indicates arrow II.
- *Arrow III.*:: shows the direction of movement of the loading device 43 with the upper plate 2a, 2b, 2c, 2d, 2e, 2f attached. In the lifted state, the weighing system (corresponds to means 42 for identifying each plate 2a, 2b, 2c, 2d, 2e, 2f) detects the weight of the plate 2a, 2b, 2c, 2d, 2e, 2f, thereby identifying the plate typ I to V. Alternatively or additionally, a camera (not shown) may be provided to allow detection of the plate material and/or the dimensions and/or the thickness of the plate 2a, 2b, 2c, 2d, 2e, 2f.
- *Arrow IV.:*: indicates the movement of the gripper 4 towards the first stacking table 9. The gripper 4 places the plate 2a, 2b, 2c, 2d, 2e, 2f on the first stacking table 9, thereby forming the first supply stack 91 of unsorted plates 2a, 2b, 2c, 2d, 2e, 2f.

**Figure 1B** shows the process steps of forming a second supply stack 101 of unsorted plates 2a, 2b, 2c, 2d, 2e, 2f, determining the plate type I to V of the plate 2a, 2b, 2c, 2d, 2e, 2f to be transferred to the machining table 71 as next, selecting one of the supply stacks 91, 101 and picking up an upper plate 2a, 2b, 2c, 2d, 2e, 2f from the selected supply stack 91, 101 and transporting the upper plate 2a, 2b, 2c, 2d, 2e, 2f to the respective other supply stack 91, 101.

It depends on the status of the process, if a second supply stack 101 must be formed on the second stacking table 10 or if a second supply stack 101 already exists. First, the plate type I to V of the plate 2a, 2b, 2c, 2d, 2e, 2f to be transferred to the machining table 71 as next is determined. This is done by means of the process control and is not shown in Figure 1B. In Figure 1B, the plate to be transferred to the machining table 71 as next was determined by means of the process control as a plate of plate type II, here the dark-colored plate 2d. As the dark-colored plate 2d is not on top of the first supply stack 91 the plates above the dark-colored plate 2d in the first supply stack 91 must first be placed on the second stacking table 10. This shows Figure 1B.
- *Arrow V.:*: shows the direction of movement of the loading device 43 in order to pick up the upper plate with the reference number 2a.
- *Arrow VI.:*: shows the direction of movement of the loading device 43 lifting the upper plate with the reference number 2a.
- *Arrow VII.:*: shows the direction of movement of the loading device 43 in order to position the plate with the reference number 2a above the second stacking table 10.
- *Arrow VIII.:*: indicates the direction of movement of the loading device 43 when putting down the plate with the reference number 2a on the second stacking table 10.

This is repeated once (2x), whereby the plate with the reference number 2e is also placed on the second stacking table 10.

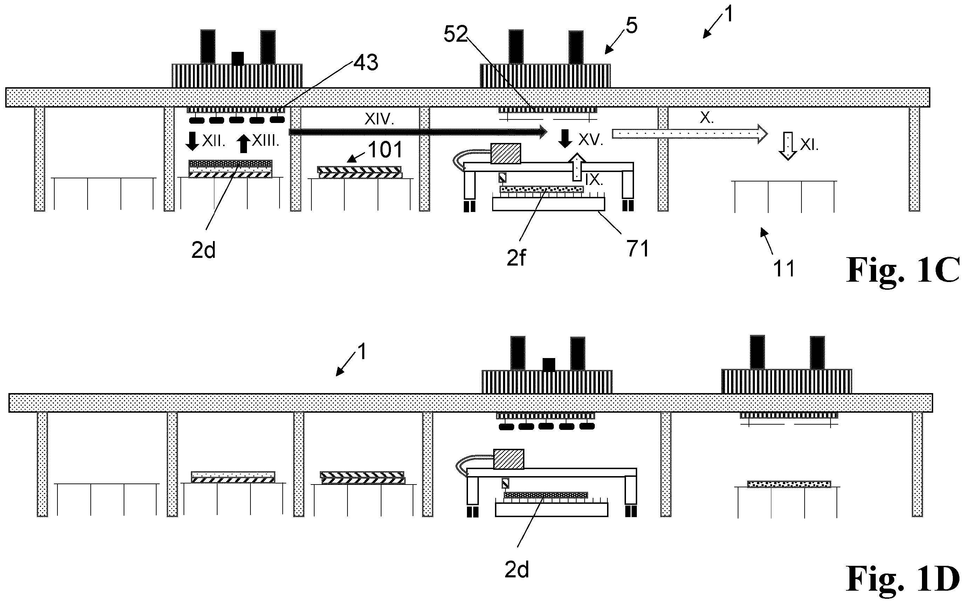

**Figure 1C** shows the process steps of removing an already machined plate 2f from the machining table 71 and transferring the upper plate of the selected supply stack 91, 101 to the machining table 71.
- *Arrow IX.:*: indicates the lifting and removal of the plate with the reference number 2f from the machining table 71 using the gripping device 52 of gripper 5.
- *Arrow X.:*: shows the direction of movement of the gripper 5 in order to position the plate with the reference number 2f above the output table 11.
- *Arrow XI.:*: indicates the direction of movement of the gripping device 52 when putting down the plate with the reference number 2f on the output table 11.
- *Arrow XII.:*: shows the direction of movement of the loading device 43 in order to pick up the upper plate with the reference number 2d.
- *Arrow XIII.*:: shows the direction of movement of the loading device 43 lifting the upper plate with the reference number 2d.
- *Arrow XIV.*:: shows the direction of movement of the loading device 43 in order to position the plate with the reference number 2d above the machining table 71.
- *Arrow XV.:*: indicates the direction of movement of the loading device 43 when putting down the plate with the reference number 2d on the machining table 10.

**Figure 1D** shows the situation at the beginning of the thermal processing of the plate with the reference number 2d.

**Figure 2A** shows in a side view a second sorting system 200 according to the invention. For the purpose of clarity, the features of the sorting system 200 are primarily described with reference to Figure 2A. The sorting system 200 differs from the sorting system 1 known from Figures 1A to 1D in two major points, namely on the one hand in the use of pallets and on the other hand in the omission of a separate deposit table.

The sorting system 200 comprises a portal 3 with two grippers 4, 5. Below the portal 3 a laser processing machine 7 having a machining table 71 and a laser 72, a first stacking table 9, a second stacking table 10 and an output table 11 are arranged.

The sorting system 200 is designed for transferring plates 2b, 2e to the machining table 71 of the thermal processing machine 7. The plates 2b, 2e are of different plate types I to V, they differ in their plate thickness, size and material (see Table 1). The upper plate 2b, 2e in a pallet 202a, 202b, 202c, 202d, 202e can be selectively picked up and transported with the grippers 4, 5. As plates of the same plate type are detachably and separably combined from each other in partial pallets 202a, 202b, 202c, 202d and as the pallets 202a, 202b, 202c, 202d are stackable on each other, the gripper 4 is designed in such a way that it can grip pallets 202a, 202b, 202c, 202d with its arms 44 and individual plates 2b, 2e with its several suction heads 41 via a suction mechanism. The first gripper 4 is designed to pick up pallets 202a, 202b, 202c, 202d from the first stacking table 9 or the second stacking table 10 and transfer them between said tables 9, 10. Furthermore, the first gripper 4 is designed to pick up plates 2b, 2e from a pallet 202a, 202b, 202c, 202d on the first stacking table 9, from a pallet 202a, 202b, 202c, 202d on the second stacking table 10 or from the machining table 71 and to transfer them between said tables 9, 10, 11. Furthermore, the first gripper 4 comprises a means 242 for identifying each plate 2a, 2b, 2c, 2d, 2e in form of a barcode scanner.

The grippers 4, 5 are attached to the portal 3 in such a way that they are movable laterally thereon. The directions of their movement are indicated by arrow 6.

The second gripper 5 is designed to pick up plates 2b, 2e which were processed with the laser processing machine 7 from the machining table 71 and place them on the output table 11. It comprises two pivoting arms 51 for gripping the plate 2b, 2e.

In the following, the method for transferring plates 2b, 2e to the machining table 71 according to the invention is explained in detail below with reference to Figures 2A to 2D:
**Figure 2A** shows the process steps of forming a chaotic first supply stack 91 of plates on the first stacking table 9 by stacking partial pallets 202a, 202b, 202c, 202d on top of each other, depositing further pallets 202a, 202b, 202c, 202d on the first stacking table 9 and identifying each plate 2b, 2e.
- *Arrows i.*/*ii.:*: indicate the deposition of pallets 202a, 202b, 202c, 202d on the first stacking table 9, thereby forming a first supply stack 91 of unsorted pallets. As in each pallet 202a, 202b, 202c, 202d a plurality of plates 2b, 2e of the same type are detachably and separably combined, the first supply stack 9 is a chaotic stack of plates 2c, 2e. The deposition of pallets 202a, 202b, 202c, 202d on the first stacking table 9 may be done by forklift or crane. Each of the pallets 202a, 202b, 202c, 202d is provided with a barcode that codes the plate type I to V of the plates 2b, 2e stored on the respective pallet 202a, 202b, 202c, 202d. When a pallet 202a, 202b, 202c, 202d is stacked on the first supply stack 91, the barcode of this pallet 202a, 202b, 202c, 202d is scanned with the scanner 242. As a pallet 202a, 202b, 202c, 202d only contains plates 2b, 2e of one plate type I to V, all plates 2b, 2e of the respective pallet 202a, 202b, 202c, 202d are thereby identified in relation to their plate type I to V.

**Figure 2B** shows the process step of forming a second supply stack 101.
- *Arrows iii.-v.*: show the direction of movement of the loading device 43 with the upper pallet 202a, 202b, 202c, 202d gripped by the arms 44, thereby forming the second supply stack 101.

This is repeated once (2x), whereby the pallet with the reference number 202b is also placed on the second stacking table 10.

**Figure 2C** shows the process steps of removing an already machined plate 2b, 2e from the machining table 71 and transferring the upper plate of the selected supply stack 91, 101 to the machining table 71.
- *Arrow vi.:*: indicates the picking up of the plate with reference number 2e from the machining table 71 by the gripping device 52 of gripper 5.
- *Arrow vii.:*: indicates the lifting of the plate with the reference number 2e from the machining table 71 by the gripping device 52 of gripper 5.
- *Arrow viii.:*: shows the direction of movement of the loading device 43 in order to pick up the upper plate with the reference number 2b from pallet 202b using its suction heads 41.
- *Arrow ix.:*: shows the direction of movement of the loading device 43 lifting the upper plate with the reference number 2b.
- *Arrow x.:*: shows the transfer of the plate with the reference number 2e to the output table 11 and simultaneous reloading of the machining table 71 with the plate with the reference number 2b.

**Figure 2D** shows the situation at the beginning of the thermal processing of the plate with the reference number 2b.

**Figure 3** shows a deposit table 308 with a supply stack 309 with thirteen metal plates 310, 315 on it. Furthermore, it shows a gripper 300 which can lift and transport both multiple and single plates. Therefore, the gripper 300 comprises a multiple plate gripper unit 301 and a single plate gripper unit 302. Both units can be moved by actuators 311 towards the stack 309. The single plate gripper unit 302 has several suction heads 303. The single plate gripper unit 302 can be used to lift and transport plates 310, 315 individually, namely always the top plate 310, 315 of the supply stack 309. The multiple plate gripper unit 302 has two rotatable arms 312 that can be rotated around the longitudinal axis of their carrier 313. The arms 312 can be rotated such that they engage under a plate to be lifted. Plates above this plate are lifted as well. Due to the limited strength of the arms, the number of metal plates that can be lifted with the multiple plate gripper 301 unit is limited. Here, the plate 315 shown in black is the plate of the determined plate type. With the multiple plate gripper unit 301 five plates can be lifted. The remaining two plates above the plate 315 of the determined plate type are lifted with the single plate gripping unit 302, likewise plate 315 which is then transferred to a machining table (not shown).

## Claims

1. Method for transferring metal plates (2a, 2b, 2c, 2d, 2e, 2f) to the machining table (71) of a thermal processing machine (7), wherein metal plates (2a, 2b, 2c, 2d, 2e, 2f) of a first plate type (I to V) and metal plates (2a, 2b, 2c, 2d, 2e, 2f) of at least a second plate type (I to V) are present, comprising the following process steps:
(a) Identifying of each plate (2a, 2b, 2c, 2d, 2e, 2f) at least in terms of plate type (I to V),
(b) Forming a chaotic first supply stack (91) of plates (2a, 2b, 2c, 2d, 2e, 2f), and storing information regarding plate type (I to V) and stack position of said plates (2a, 2b, 2c, 2d, 2e, 2f) in the first supply stack (91) in a storage by means of a process control,
(c) Forming at least a chaotic second supply stack (101) of plates (2a, 2b, 2c, 2d, 2e, 2f), and storing information regarding plate type (I to V) and stack position of said plates (2a, 2b, 2c, 2d, 2e, 2f) in the second supply stack (101) in the storage by means of the process control,
(d) Determining the plate type (I to V) of the plate (2a, 2b, 2c, 2d, 2e, 2f) to be transferred to the machining table (71) as next and selecting the first supply stack (91) or the at least second supply stack (101) for removal of a plate (2a, 2b, 2c, 2d, 2e, 2f) having the determined plate type (I to V) by means of the process control, and
(e) Picking up an upper plate (2a, 2b, 2c, 2d, 2e, 2f) from the selected supply stack by means of a gripper (4, 5), and
(i) transferring said upper plate (2a, 2b, 2c, 2d, 2e, 2f) to the machining table (71), if said upper plate (2a, 2b, 2c, 2d, 2e, 2f) is a plate (2a, 2b, 2c, 2d, 2e, 2f) of the determined plate type (I to V), and updating the plate type (I to V) and position information in the storage by means of the process control,
(ii) or transporting the upper plate (2a, 2b, 2c, 2d, 2e, 2f) of the selected supply stack to the respective other supply stack if the upper plate (2a, 2b, 2c, 2d, 2e, 2f) is not a part of the determined plate type (I to V), updating the plate type (I to V) and position information in the storage by means of the process control, and repeating process step (e).

2. Method according to claim 1, **characterized in that** the process steps (d) and (e) are carried out while simultaneously machining at least one other plate (2a, 2b, 2c, 2d, 2e, 2f) by means of the thermal processing machine (7).

3. Method according to claim 2, **characterized in that** the machining of the at least one other plate (2a, 2b, 2c, 2d, 2e, 2f) comprises thermal machining of a first other plate (2a, 2b, 2c, 2d, 2e, 2f) on the machining table (71) and/or transporting away a second, already machined, other plate (2a, 2b, 2c, 2d, 2e, 2f), from the machining table (71) to a deposit station.

4. Method according to one or more of the preceding claims, **characterized in that** identifying each plate (2a, 2b, 2c, 2d, 2e, 2f) at least in terms of its plate type (I to V) according to process step (a) comprises determining of the individual thickness of the plate (2a, 2b, 2c, 2d, 2e, 2f) and/or determining of the individual material of the plate (2a, 2b, 2c, 2d, 2e, 2f) and/or determining the individual weight of the plate (2a, 2b, 2c, 2d, 2e, 2f), whereby the information about the individual thickness and/or individual material and/or individual weight of the plate (2a, 2b, 2c, 2d, 2e, 2f) is stored in the storage by means of the process control.

5. Method according to one or more of the preceding claims, **characterized in that** when picking up the upper plate (2a, 2b, 2c, 2d, 2e, 2f) according to process step (e), the plate type (I to V) of the picked-up plate (2a, 2b, 2c, 2d, 2e, 2f) is determined and compared with the information on plate type stored in the storage.

6. Method according to one or more of the preceding claims, **characterized in that**, when forming the first supply stack (91) according to process step (b), plates (2a, 2b, 2c, 2d, 2e, 2f) of the first plate type (I to V) and/or plates of the at least second plate type (I to V) are deposited one on top of each other on a first stacking table (9) by means of a transport device.

7. Method according to one or more of the preceding claims 1 to 5, **characterized in that**, during forming of the first supply stack according to process step (b), plates (2a, 2b, 2c, 2d, 2e, 2f) of the first plate type (I to V) and/or plates (2a, 2b, 2c, 2d, 2e, 2f) of the at least second plate type (I to V) are deposited on a deposit table (8) by means of a transport device, removed from there by means of a gripper (4, 5), and are fed to a first stacking table (9) being deposited there one on top of the other, thereby forming the first supply stack (91).

8. Method according to one or more of the preceding claims, **characterized in that**, when forming the second supply stack (101), plates (2a, 2b, 2c, 2d, 2e, 2f) of the first plate type (I to V) and/or of the at least second plate type (I to V) are removed by means of the gripper (4, 5) either from the first stacking table (9) or from a deposit table (8) and are deposited one on top of the other on a second stacking table (10).

9. Method according to one or more of the preceding claims, **characterized in that** a plurality of plates (2a, 2b, 2c, 2d, 2e, 2f) of the same plate type (I to V) are detachably and separably combined from each other in a partial pallet (202a, 202b, 202c, 202d), and that forming the first supply stack (91) according to process step (b) and forming the second supply stack (101) according to process step (c) comprises stacking partial pallets (202a, 202b, 202c, 202d) on top of each other, and that a partial pallet (202a, 202b, 202c, 202d) or an upper plate (2a, 2b, 2c, 2d, 2e, 2f) from a partial pallet (202a, 202b, 202c, 202d) is selectively picked up and transported with a gripper (4, 5).

10. Method according to one or more of the preceding claims, **characterized in that** picking up an upper plate (2a, 2b, 2c, 2d, 2e, 2f) from the selected supply stack by means of a gripper (4, 5) according to process step (e) comprises picking up several plates (2a, 2b, 2c, 2d, 2e, 2f) simultaneously by means of multiple plate gripper, whereby the simultaneously picked up plates (2a, 2b, 2c, 2d, 2e, 2f) are transported to the respective other supply stack according to process step (ii).

11. Method according to one or more of the preceding claims, **characterized in that** transferring said upper plate to the machining table (71) according to process step (i) is achieved by means of a single plate gripper picking up a single plate (2a, 2b, 2c, 2d, 2e, 2f).

12. Sorting system (1; 200) for transferring metal plates (2a, 2b, 2c, 2d, 2e, 2f), present in a first plate type (I to V) and in at least one second plate type (I to V), to the machining table (71) of a thermal processing machine (7), the sorting system (1; 200) having:
(A)a means (42, 242) for identifying each plate (2a, 2b, 2c, 2d, 2e, 2f) at least in terms of plate type (I to V),
(B)a first stacking table (9) for receiving a chaotic first supply stack (91) of plates (2a, 2b, 2c, 2d, 2e, 2f),
(C)a second stacking table (10) for receiving a chaotic second supply stack (101) of plates (2a, 2b, 2c, 2d, 2e, 2f),
(D)a storage for storing information regarding plate type (I to V) and stack position of the plates (2a, 2b, 2c, 2d, 2e, 2f) present in said first supply stack (91) and said at least second supply stack (101),
(E)a process controller being designed to store and update information on plate type (I to V) and stack position in the storage, and to select the first supply stack (91) or the at least second supply stack (92) for removal of a plate (2a, 2b, 2c, 2d, 2e, 2f) having a previously determined plate type (I to V), and
(F)at least a gripper (4, 5) for selectively picking up an upper plate (2a, 2b, 2c, 2d, 2e, 2f) from either the first supply stack (91) or the at least second supply stack (101), the gripper (4,5) being designed
(i) to transfer the upper plate (2a, 2b, 2c, 2d, 2e, 2f) to the machining table (71), if said upper plate (2a, 2b, 2c, 2d, 2e, 2f) is a plate (2a, 2b, 2c, 2d, 2e, 2f) of the plate type (I to V) to be transferred to the machining table (71) as next,
(ii) or to transfer the upper plate (2a, 2b, 2c, 2d, 2e, 2f) to the respective other supply stack if the upper plate (2a, 2b, 2c, 2d, 2e, 2f) is not a plate (2a, 2b, 2c, 2d, 2e, 2f) of the plate type (I to V) to be transferred to the machining table (71) as next.

13. Sorting system (1; 200) according to claim 12, **characterized in that** it comprises a sensor connected to the process control for determining the individual thickness of a plate (2a, 2b, 2c, 2d, 2e, 2f) and/or the individual material of a plate (2a, 2b, 2c, 2d, 2e, 2f) and/or the individual weight of a plate (2a, 2b, 2c, 2d, 2e, 2f).

14. Sorting system (1; 200) according to claim 12 or 13, **characterized in that** it comprises a transport device or that it cooperates with a transport device suitable for stacking plates (2a, 2b, 2c, 2d, 2e, 2f) on a deposit table (8), and that the gripper (4, 5) is adapted to pick up plates (2a, 2b, 2c, 2d, 2e, 2f) from the deposit table (8) and transport the plates (2a, 2b, 2c, 2d, 2e, 2f) to the first stacking table (9).

15. Sorting system (1; 200) according to one or more of claims 12 to 14, **characterized in that** a plurality of plates (2a, 2b, 2c, 2d, 2e, 2f) of the same plate type (I to V) are detachably and separably combined from each other in a partial pallet (202a, 202b, 202c, 202d), that forming the first supply stack (91) and forming the second supply stack (101) comprises stacking partial pallets (202a, 202b, 202c, 202d) on top of each other, wherein the gripper (4, 5) is adapted for picking up and transporting both a partial pallet (202a, 202b, 202c, 202d) and a top plate (2a, 2b, 2c, 2d, 2e, 2f) from a partial pallet (202a, 202b, 202c, 202d).
